(19) Europäisches Patentamt
European Patent Office
Office européen des brevets

(11) **EP 4 155 669 B1**

(12) **EUROPEAN PATENT SPECIFICATION**

(45) Date of publication and mention
of the grant of the patent:
**13.05.2026 Bulletin 2026/20**

(21) Application number: **20936432.2**

(22) Date of filing: **28.05.2020**

(51) International Patent Classification (IPC):
*G01S 5/16* (2006.01)          *G01C 21/00* (2006.01)
*G01C 21/16* (2006.01)         *G01C 25/00* (2006.01)
*G06T 7/579* (2017.01)         *G01S 19/48* (2010.01)
*G01S 19/49* (2010.01)

(52) Cooperative Patent Classification (CPC):
**G01S 5/16; G01C 21/005; G01C 21/1652;
G01C 21/1656; G01C 21/3837; G01C 21/3848;
G01C 25/00; G06T 7/579;** G01S 19/485;
G01S 19/49; G06T 2207/10016; G06T 2207/30244

(86) International application number:
**PCT/CN2020/092921**

(87) International publication number:
**WO 2021/232470 (25.11.2021 Gazette 2021/47)**

(54) **MULTI-SENSOR FUSION-BASED SLAM METHOD AND SYSTEM**

SLAM-VERFAHREN UND SYSTEM AUF DER BASIS VON MULTISENSORFUSION

PROCÉDÉ ET SYSTÈME DE SLAM À BASE DE FUSION DE CAPTEURS MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.05.2020 CN 202010422626**

(43) Date of publication of application:
**29.03.2023 Bulletin 2023/13**

(73) Proprietor: **Beijing Greenvalley Technology Co.,
Ltd.**
**Haidian District**
**Beijing 100094 (CN)**

(72) Inventor: **LIU, Jiting**
**Beijing 100094 (CN)**

(74) Representative: **Grey, Ian Michael et al**
**Venner Shipley LLP**
**200 Aldersgate**
**London EC1A 4HD (GB)**

(56) References cited:
**CN-A- 106 153 048      CN-A- 109 341 706
CN-A- 109 556 615      CN-A- 109 900 265
CN-A- 110 057 373      US-A1- 2018 364 045**

# EP 4 155 669 B1

## Description

### TECHNICAL FIELD

The present invention relates to the field of navigational multi-sensor fusion technologies, and in particular, to a multi-sensor fusion-based Simultaneous Localization And Mapping (SLAM) method, system, electronic device and computer-readable medium.

### BACKGROUND

SLAM technology is real-time localization and map construction. That is, data regarding a surrounding environment collected by sensors is processed, the current location of a moving system in an unknown environment is fed back in real time, and the map of the surrounding environment of the moving system is drawn simultaneously. This map may be a 2D planar map or a 3D map of the surrounding environment. The technology has been widely used in robotics, autonomous driving, virtual reality, mapping, agriculture, forestry, electric power, construction, among other industries. At present, common sensor units include a laser, an inertial measurement unit (IMU), a vision camera, and a global navigation satellite system (GNSS).

Currently, relatively mature SLAM algorithms may be broadly classified into laser SLAM and visual SLAM. In the laser SLAM, a laser sensor is mainly used to obtain data for simultaneous localization and mapping. A laser does not depend on the lighting of a surrounding environment and can scan the high-precision 3D information of the surrounding environment. The algorithm of the laser SLAM is relatively robust. At present, as the cost of lasers decreases, laser SLAM gradually becomes one of the popular research fields in the SLAM field. However, in an environment without obvious structures, for example, an environment such as a flat wall, grassland, or a narrow corridor, lasers cannot detect effective environmental features, and as a result localization and mapping tend to fail. In the visual SLAM, a camera sensor is mainly used to obtain image data of a surrounding environment, and captured image information is used to perform localization and mapping. The visual SLAM has a low price and strong visualization and has been the most popular orientation in the field of SLAM research. However, a visual camera is very dependent on the lighting information and texture information of the surrounding environment. Once the lighting changes excessively or the texture is repetitive and monotonous, the mapping tends to fail.

In both the laser SLAM and the visual SLAM, accumulated errors gradually increase with the elapse of time, resulting in reduced precision in localization and mapping. A closed-loop manner is a relatively popular at present used for correction. However, in large-scale mapping, limited by a surrounding environment, the precision often fails to meet the precision required in current map production.

CN 109341706 discloses a manufacturing method of a multi-feature fusion map for an autonomous vehicle. The method comprises the following steps: collecting data of each sensor by utilizing an on-board laser radar device; generating a three-dimensional point cloud map by utilizing Inertial Measurement Unit (IMU) data and laser measurement data; generating a visual feature map by utilizing the IMU data and camera data; preprocessing GPS data, and converting a geodetic coordinates into a spatial rectangular coordinates; performing global optimization fusion by utilizing a continuous time SLAM algorithm; and generating the multi-feature fusion map. Various sensor data of a laser radar, an IMU, a camera and a GPS, etc., are integrated, so that the stability and the accuracy are greatly improved. The data are processed by fusing a visual SLAM algorithm and a laser SLAM algorithm, thereby obtaining a better composition effect than a single visual SLAM algorithm or a single laser SLAM algorithm.

CN 109900265 discloses a camera assisted Beidou-based robot positioning algorithm. The algorithm includes the time-space synchronization of a Beidou satellite system, an inertial sensor and a visual sensor; the data pre-processing of the fusion positioning of the Beidou satellite system, the inertial sensor and the visual sensor; and the fusion precise positioning of the Beidou satellite system, the inertial sensor, and the visual sensor fusion. The visual sensor and the inertial sensor are mounted on a robot.

CN 109556615 discloses a driving map generation method based on multi-sensor fusion cognition of automatic driving. An environment model is built for an intelligent vehicle. The driving map provides environment information such as lane information and obstacle information in a current environment for the intelligent vehicle by combining the motor ability of the vehicle with current vehicle road information and comprises devices such as vehicle-mounted sensors, vehicle-mounted environment sensing equipment and a vehicle-mounted industrial personal computer. The vehicle-mounted environment sensing equipment comprises an intelligent camera, laser radars, a GPS and an inertial navigation device. The industrial personal computer is responsible for a vehicle partial path positioning algorithm based on a road network database and a high-precision map, a camera-based vehicle deviation early warning algorithm, an obstacle recognizing and tracking algorithm based on camera and laser radar data fusion and a real-time driving map generation algorithm based on multi-sensor information feature level fusion.

CN 106153048 discloses a robot indoor localization and mapping system based on a plurality of sensors. The robot indoor localization and mapping system comprises laser localization, visual closed-loop detection, and a map optimizing module. The laser localization consists of laser interframe matching and laser closed-loop detection. The laser interframe matching is used for obtaining the information of laser sensors and inputting the matching result into the visual closed-loop detection. The visual closed-loop detection uses visual information to complete closed-loop detection, judging whether the laser closed-loop detection is executed or not according to the detection result, and inputting the detection result into the map optimizing module. The map optimizing module is used for evaluating attitudes according to the closed-loop detection result and applying the evaluation results for feeding back closed-loop detection.

## SUMMARY OF THE INVENTION

In view of this, an objective of the present invention is to provide a multi-sensor fusion-based SLAM mapping method and system, to mitigate the technical problem in the related art that easy susceptibility to a surrounding environment leads to low precision and great errors.

According to a first aspect, and as defined in independent claim 1, embodiments of the present invention provide a multi-sensor fusion-based SLAM mapping method for a server, comprising: obtaining a plurality of sensor data regarding a surrounding environment of a moving platform, the plurality of sensor data comprising point cloud data, image data, inertial measurement unit (IMU) data, and global navigation satellite system (GNSS) data; performing hierarchical processing on the plurality of sensor data to generate a plurality of localization information, wherein one sensor data corresponds to one localization information; obtaining target localization information of the moving platform based on the plurality of localization information; generating a high-precision local map based on the target localization information; and performing a closed-loop detection operation to the high-precision local map to obtain a high-precision global map of the moving platform. The step of obtaining the plurality of sensor data regarding the surrounding environment of the moving platform comprises: with a laser as a benchmark, calibrating position relationships among a camera, an IMU, a GNSS, and the laser to obtain calibration information, wherein the laser, the camera, the IMU, and the GNSS are all sensors on the moving platform; with time of the GNSS as a benchmark, synchronizing time of the laser, time of the camera, and time of the IMU to a current time system of the GNSS; and synchronously collecting data from the laser, the camera, the IMU, and the GNSS to obtain the plurality of sensor data regarding the surrounding environment of the moving platform, where the point cloud data is the data collected from the laser, the image data is the data collected from the camera, the IMU data is the data collected from the IMU, and the GNSS data is the data collected from the GNSS.

Optionally, in the step of performing hierarchical processing on the plurality of sensor data, a plurality of localization information is generated, which includes initial localization information, first localization information, and second localization information, comprising: generating the initial localization information based on the IMU data, the GNSS data, and the calibration information; generating the first localization information by using visual SLAM on basis of the initial localization information and the image data; and generating the second localization information by using laser SLAM on basis of the first localization information and the point cloud data.

Further, the step of obtaining target localization information of the moving platform based on the plurality of localization information comprises: extracting a keyframe matching point set of the image data and a point cloud data matching point set; generating a comprehensive localization information database based on the second localization information, the IMU data, the GNSS data, the keyframe matching point set, and the point cloud data matching point set; performing joint optimization to data sets in the comprehensive localization information database to gain a high-precision trace of the moving platform; and using the high-precision trace as the target localization information.

Further, in the step of generating a high-precision local map on the target localization information, the high-precision local map includes a local image map and a local point cloud three-dimensional scene map, comprising: resolving position and attitude information of the keyframe of the image data based on the high-precision trace to generate the local image map; and resolving position and attitude information of the point cloud data based on the high-precision trace to generate the local point cloud three-dimensional scene map.

Further, the step of performing a closed-loop detection operation to the high-precision local map to obtain a high-precision global map of the moving platform comprises: performing the closed-loop detection operation to the high-precision local map to obtain a local map rotation and translation matrix; constructing an image optimization pose constraint based on the local map rotation and translation matrix; correcting the high-precision trace by using the image optimization pose constraint to obtain a corrected high-precision trace; and obtaining the high-precision global map of the moving platform based on the corrected high-precision trace.

According to a second aspect, and as defined in independent claim 6, embodiments of the present invention further provide a multi-sensor fusion-based SLAM mapping system for a server, comprising an obtaining module, a hierarchical processing module, a localizing module, a first generation module, and a second generation module, wherein the obtaining module is configured to obtain a plurality of sensor data regarding a surrounding environment of a moving platform, the plurality of sensor data comprising point cloud data, image data, inertial measurement unit (IMU) data, and global navigation satellite system (GNSS) data; the hierarchical processing module is configured to perform hierarchical processing on the plurality of sensor data to generate a plurality of localization information, wherein one sensor data corresponds to one localization information; the localizing module is configured to obtain target localization information of the moving platform based on the plurality of localization information; the first generation module is configured to generate a high-precision local map based on the target localization information; and the second generation module is configured to perform a closed-loop detection operation on the high-precision local map to obtain a high-precision global map of the moving platform. The obtaining module further comprises a calibration unit, a synchronization unit, and a collection unit, wherein the calibration unit is configured with a laser as a benchmark to calibrate position relationships among a camera, an IMU, a GNSS, and the laser to obtain calibration information, wherein the laser, the camera, the IMU and the GNSS are all sensors on the moving platform; the synchronization unit is configured with time of the GNSS as a benchmark to synchronize time of the laser, time of the camera, and time of the IMU to a current time system of the GNSS; and the collection unit is configured to synchronously collect data from the laser, the camera, the IMU, and the GNSS to obtain the plurality of sensor data regarding the surrounding environment of the moving platform, wherein the point cloud data is the data collected from the laser, the image data is the data collected from the camera, the IMU data is the data collected from the IMU, and the GNSS data is the data collected from the GNSS.

According to a third aspect, and as defined in independent claim 7, embodiments of the present invention further provide an electronic device comprising a memory, a processor and a computer program stored in the memory and performed by the processor, wherein the processor, when performing the computer program, implements steps in the method according to the foregoing first aspect.

According to a fourth aspect, and as defined in independent claim 8, embodiments of the present invention further provide a computer-readable medium having nonvolatile program code performed by a processor, wherein the processor performs the method according to the foregoing first aspect according to the program code.

The present invention provides a multi-sensor fusion-based SLAM mapping method and system for a server, comprising: obtaining a plurality of sensor data regarding a surrounding environment of a moving platform, the plurality of sensor data including point cloud data, image data, IMU data, and GNSS data; performing hierarchical processing on the plurality of sensor data to generate a plurality of localization information, wherein one sensor data corresponds to one localization information; obtaining target localization information of the moving platform based on the plurality of localization information; generating a high-precision local map based on the target localization information; and performing a closed-loop detection operation to the high-precision local map to obtain a high-precision global map of the moving platform. The present invention mitigates the technical problem in the related art that easy susceptibility to a surrounding environment leads to low precision and great errors.

## BRIEF DESCRIPTION OF THE DRAWINGS

To describe the technical solutions in specific embodiments of the present invention or the prior art more clearly, the following briefly introduces the accompanying drawings required for describing the specific embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of a multi-sensor fusion-based SLAM mapping method according to an embodiment of the present invention;
FIG. 2 is a method flowchart of obtaining a plurality of sensor data regarding a surrounding environment of a moving platform according to an embodiment of the present invention;
FIG. 3 is a method flowchart of performing hierarchical processing on a plurality of sensor data according to an embodiment the present invention;
FIG. 4 is a method flowchart of performing joint optimization on a plurality of localization information according to an embodiment the present invention;
FIG. 5 is a method flowchart of obtaining a high-precision global map of a moving platform according to an embodiment of the present invention;
FIG. 6 is a schematic diagram of a multi-sensor fusion-based SLAM mapping system according to an embodiment of the present invention; and
FIG. 7 is a schematic diagram of another multi-sensor fusion-based SLAM mapping system according to an embodiment of the present invention.

## DETAILED DESCRIPTION

The following clearly and completely describes the technical solutions of the present invention with reference to the accompanying drawings. Apparently, the described embodiments are merely some rather than all of the embodiments of the present invention. All other embodiments obtained by a person of ordinary skill in the art based on the embodiments of the present invention without creative efforts shall fall within the protection scope of the present invention.

Embodiment 1

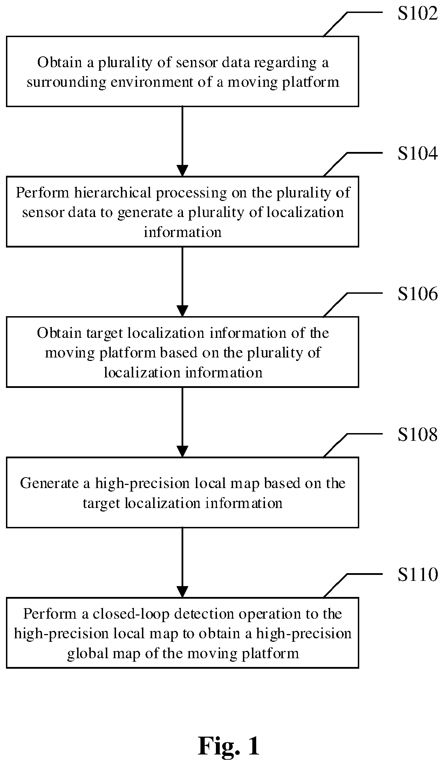

FIG. 1 is a flowchart of a multi-sensor fusion-based SLAM mapping method according to an embodiment of the present invention. The method is applied to a server. As shown in FIG. 1, the method specifically includes the following steps.

Step S102: Obtain a plurality of sensor data regarding a surrounding environment of a moving platform, the plurality of sensor data includes point cloud data, image data, IMU data, and GNSS data.

Specifically, a laser collects point cloud information of a surrounding environment to obtain the point cloud data. A camera collects image information to obtain the image data. An IMU obtains the angular velocity and acceleration of the moving platform to obtain the IMU data. A GNSS obtains the absolute longitude and latitude coordinates at every moment to obtain the GNSS data.

Step S104: Perform hierarchical processing on the plurality of sensor data to generate a plurality of localization information, wherein one sensor data corresponds to one localization information.

Step S106: Obtain target localization information of the moving platform based on the plurality of localization information.

Step S108: Generate a high-precision local map based on the target localization information.

Step S110: Perform a closed-loop detection operation to the high-precision local map to obtain a high-precision global map of the moving platform.

The present invention provides a multi-sensor fusion-based SLAM mapping method, including: obtaining a plurality of sensor data regarding a surrounding environment of a moving platform, the plurality of sensor data including point cloud data, image data, IMU data, and GNSS data; performing hierarchical processing on the plurality of sensor data to generate a plurality of localization information, wherein one sensor data corresponds to one localization information; obtaining target localization information of the moving platform based on the plurality of localization information; generating a high-precision local map based on the target localization information; and performing a closed-loop detection operation to the high-precision local map to obtain a high-precision global map of the moving platform. The present invention mitigates the technical problem in the related art that easy susceptibility to a surrounding environment leads to low precision and great errors.

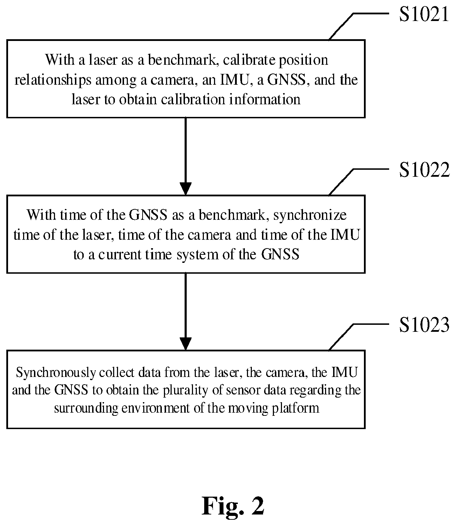

As shown in FIG. 2, Step S102 includes the following steps.

Step S1021: With a laser as a benchmark, calibrate position relationships among a camera, an IMU, a GNSS, and the laser to obtain calibration information, where the laser, the camera, the IMU, and the GNSS are all sensors on the moving platform.

Specifically, for the calibration between the laser and the camera, a laser and a camera on the same rigid body are used to face a calibration target to collect data. Information such as surface features in point cloud data and corner points in an image are fitted. Optimization is performed by using a distance from a point to a surface to solve extrinsic parameters of the camera and the laser. For the calibration between the laser and the IMU, the trace of a moving device may be obtained by using the point cloud data collected by the laser, and the trace of the moving device may also be obtained by the IMU. Extrinsic parameters may be obtained by aligning the traces. Because an accelerometer of the IMU is prone to drift, the extrinsic parameters between the two can only be approximately estimated (or measured with a ruler).

Step S1022: With time of the GNSS as a benchmark, synchronize time of the laser, time of the camera and time of the IMU to a current time system of the GNSS.

Step S1023: Synchronously collect data from the laser, the camera, the IMU and the GNSS to obtain the plurality of sensor data regarding the surrounding environment of the moving platform, wherein the point cloud data is the data collected from the laser, the image data is the data collected from the camera, the IMU data is the data collected from the IMU, and the GNSS data is the data collected from the GNSS.

In the embodiments of the present invention, the plurality of localization information include initial localization information, first localization information, and second localization information.

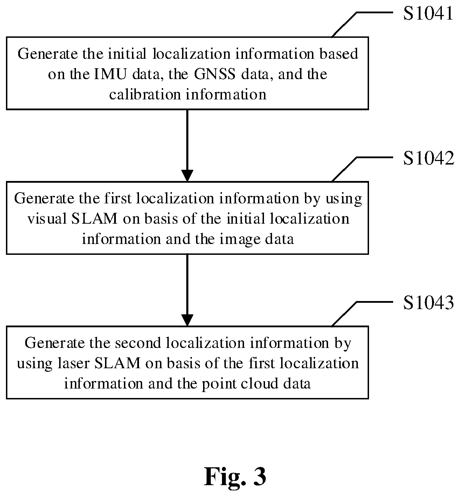

Optionally, as shown in FIG. 3, Step S104 includes the following steps.

Step S1041: Generate the initial localization information based on the IMU data, the GNSS data, and the calibration information.

Specifically, the initialization and alignment of a navigation system are first completed on the moving platform. Initial parameters of Kalman filtering are set, and then a posteriori state estimation information $P0_t$ at every moment t is solved by using GNSS global localization information, an INS, and the Kalman filtering theory.

Step S1042: Generate the first localization information by using visual SLAM on basis of the initial localization information and the image data.

Specifically: a) For each keyframe image, feature points of the keyframe image are calculated. Specific feature points include an ORB feature point, a Harris corner point, and the like.

b). For two adjacent image keyframes, according to initial localization information P0, feature points $F_1$ and $F_2$ with positions corrected are shown in the following formula. $P^{t-1}$ represents a set of all feature points of the image frame $F_1$, and $P^t$ represents a set of all feature points of the image frame $F_2$.

$$\begin{cases} P^t = \{P_1{}^t, P_1{}^t, \cdots, P_N^t \} \in F_1 \\ P^{t-1} = \{P_1{}^{t-1}, P_1{}^{t-1}, \cdots, P_1^{t-1} \} \in F_2 \end{cases}.$$

RANSAC is used to eliminate outliers, and the calculation is further optimized to obtain feature points $P^t$ and $P^{t-1}$ in a normalization plane of the camera.

For the reason of being in the same feature environment, a conversion relationship among these feature matching point pairs may be expressed as the following formula: $\forall i, P_i^t = RP_i^{t-1} + T$,

wherein R is a pose rotation and transformation matrix of a robot, T is a displacement matrix of the robot, and $P_i^t$ and $P_i^{t-1}$ are a feature point matching point pair from a moment t to a moment t+1. A method of minimizing a reprojection error is used to solve poses R and T, as shown in the following formula:

$$\{R, T\} = \arg\min \sum_{i=1}^{N} \|P_i^t - (R^{t-1}P_i + T)\|^2,$$

wherein $P^t$ represents the set of all feature points of the image frame $F_1$, and $P^{t-1}$ represents the set of all feature points of the image frame $F_1$; and R is a rotation matrix of a vector, T is a translation vector of the vector, and N represents a quantity of feature point pairs.

A rotation and translation matrix of adjacent keyframes is calculated, first localization information P1 of all keyframes is sequentially obtained, and a current optimal feature matching pair (that is, an optimal feature matching pair regarding the first localization information P1) is added to a matching database.

Step S1043: Generate the second localization information by using laser SLAM on basis of the first localization information and the point cloud data.

Specifically, for laser point cloud data $P_K$ of a current frame, according to the following formula, a point feature $F_{K1}$, a line feature $F_{K2}$, and a surface feature $F_{K3}$ of the laser point cloud data may be calculated.

$$f = \frac{1}{|p| \cdot \|X_i\|} \sum_{j \in p, j \neq i} \|(X_i - X_j)\|,$$

wherein i is a point in $P_K$, $X_i$ is a coordinate of the point i, p is a neighborhood point set of the point i, j is a point in p, $X_i$ is a coordinate of the point i, and f is a feature value; and thresholds $M_1$, $M_2$, $M_3$, and $M_4$ are given in advance, a point with the feature value f less than $M_1$ belongs to a feature $F_{K1}$, a point with the feature value f greater than $M_2$ and less than $M_3$ belongs to $F_{k2}$, and a point with the feature value f greater than $M_4$ belongs to $F_{k3}$.

According to the first localization information P1, feature data of each frame is converted into a coordinate system corresponding to the localization information P1. Point cloud data $P_t$ and $P_{t-1}$ of two adjacent frames are obtained, domain search is performed in $F_t$ to all matching pairs $F_{t-1}$, to determine all candidate feature matching pairs. Rotation and translation parameters R and T of the point cloud data of the two adjacent frames are solved according to the matching pairs and by using a least squares method. Specifically, the parameters may be solved by using the following formula:

$$Y = RX + T,$$

wherein Y represents a feature extracted from the latter data frame of the two adjacent data frames, X represents a feature extracted from the former data frame of the two adjacent data frames, R is a rotation matrix of a vector, and T is a translation vector of the vector.

Next, selection may be performed to matching pairs according to an obtained result, and the feature point $F_t'$ is calculated again. For a feature point in a point cloud $P_{t-1}$, $F_t'$ is searched again for feature point pairs, and recalculation is performed to obtain new rotation and translation matrices R and T, which are updated. Finally, rotation and translation position information $R_{t-1}$ and $T_{t-1}$ of two adjacent frames are finally obtained, and a current optimal feature matching pair is added to a matching database K.

Finally, according to a conversion matrix of adjacent frames, second localization information P2 according to laser point cloud data is obtained (that is, an optimal feature matching pair of the second localization information P2). The foregoing FIG. 3 involves the following operations: Step S1041: Generate the initial localization information based on the IMU data, the GNSS data, and the calibration information. Step S1042: Generate the first localization information by using visual SLAM on basis of the initial localization information and the image data. Step S1043: Generate the second localization information by using laser SLAM on basis of the first localization information and the point cloud data. In the foregoing technical solution, a brand new algorithm design is used for generating the initial localization information based on the IMU data, the GNSS data, and the calibration information (a method of minimizing a reprojection error and a least squares method are combined). The foregoing calculation algorithm is applied to obtain initial localization information.

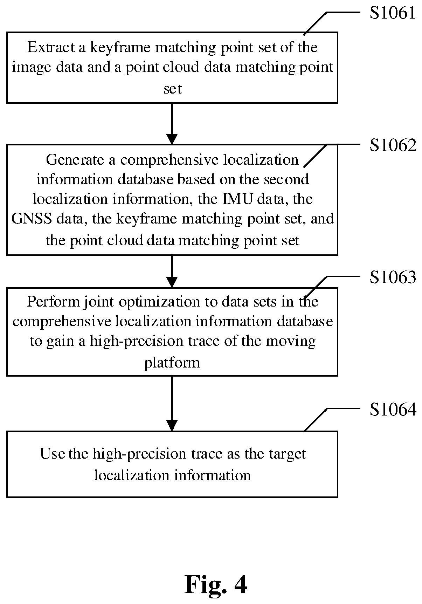

Optionally, FIG. 4 is a method flowchart of performing joint optimization on a plurality of localization information according to an embodiment the present invention. As shown in FIG. 4, the method includes the following steps:

Step S1061: Extract a keyframe matching point set of the image data and a point cloud data matching point set.
Step S1062: Generate a comprehensive localization information database based on the second localization information, the IMU data, the GNSS data, the keyframe matching point set, and the point cloud data matching point set.
Step S1063: Perform joint optimization to data sets in the comprehensive localization information database to gain a high-precision trace of the moving platform.
Step S1064: Use the high-precision trace as the target localization information.

Specifically, a sliding window with a capacity of n is first constructed. Each unit of the sliding window includes keyframe matching pair information of an original camera or laser point cloud matching pair information, and IMU preintegration information. The IMU preintegration information is an observed value formed by all IMU data of two consecutive frames of data through an IMU preintegration model. Next, a factor graph model is sequentially constructed for data in the sliding window, including constructing an IMU preintegration constraint $Z^{imu}$, a laser point cloud feature matching constraint $Z^{laser}$, an image keyframe matching constraint $z^{img}$, a GNSS position constraint $Z^{gnss}$, and the like. A maximum a posteriori probability of joint probability distribution is solved, to obtain each state variable at each time point. A state vector that needs to be estimated is:

$$S = \left\{ E, N, U, V_e, V_n, V_u, roll, pitch, yaw, \phi_x, \phi_y, \phi_z, \sigma_x, \sigma_y, \sigma_z \right\}.$$

Wherein $E$, $N$, and $U$ respectively represent three-dimensional coordinates of a world coordinate system; $V_e$, $V_n$, and $V_u$ respectively represent an east velocity, a north velocity, and an up velocity; *roll, pitch,* and *yaw* represent attitude angles; $\phi_x$, $\phi_y$, and $\phi_z$ respectively represent deviation amounts of a gyroscope; and $\sigma_y$, $\sigma_y$, and $\sigma_z$ respectively represent deviation amounts of an accelerometer.

For a state set $S_k = \{S_1, S_2, \dots, S_k\}$ at each moment, according to the foregoing constructed measured value set $Z$ = $\{Z^{imu}, Z^{laser}, Z^{img}, Z^{gnss}\}$, a maximum a posteriori probability of joint probability distribution $p(S_k|Z_k)$ is solved:

$$S_k' = \arg_{X_k} \max p\left(S_k | Z_k\right),$$

wherein $S_k' = \left\{ S_1', S_2', \dots, S_k' \right\}$ represents an optimal estimated value of $S_k$. An optimal state amount is solved, to gain a high-precision trace T.

In the embodiments of the present invention, the high-precision local map includes a local image map and a local point cloud three-dimensional scene map. Optionally, step S108 further includes the following steps:

Step S1081: Resolve position and attitude information of the keyframe of the image data based on the high-precision trace to generate the local image map.
Step S1082: Resolve position and attitude information of the point cloud data based on the high-precision trace to generate the local point cloud three-dimensional scene map.

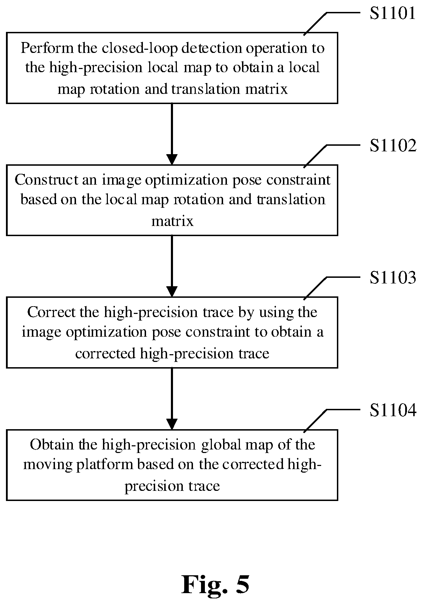

Optionally, as shown in FIG. 5, Step S110 includes the following steps.

Step S1101: Perform the closed-loop detection operation to the high-precision local map to obtain a local map rotation and translation matrix.

7

Specifically, it is initially determined according to the GNSS data whether there is a repetition between a current map and a previously scanned map. If a difference in longitude and latitude information is within a particular threshold, it is considered that the moving platform remains at the same position, and the two frames form a closed loop.

Next, it is determined, according to feature point information of images, whether there is a repetition between a local map of a current image and a previously formed image map, to perform closed-loop image detection. Specifically, a feature of each frame of picture is used to perform a search in a dictionary to calculate a similarity. If the similarity is excessively high, it is considered that the moving platform returns to a previous position, to form a closed loop.

Next, it is determined, according to laser point cloud information, whether there is a repetition between a current local point cloud map and a previously formed point cloud map, to determine to perform point cloud closed-loop detection.

Specifically, for obtained candidate determination point clouds $i$ and $j$ of two frames, a registration error $E$ of the point clouds is calculated, and a minimum error function $\phi$ is calculated. The following formulas are function formulas for calculating a registration error and a minimum error.

$$E_{i,j} = Xi - T_{i,j} \bullet X_j,$$

$$\phi = \sum\nolimits_{i,j} \left\| E_{ij} \right\|_2^2,$$

wherein $i$ is a point in a to-be-registered data frame in the current map, $X_i$ is coordinates of $i$, $j$ is a point in a global coordinate system data frame, $X_j$ is coordinates of $j$, $T_{i,j}$ is a rotation and translation matrix from j to i, $E_{i,j}$ is the registration error, and $\phi$ is a preset norm.

A determination reference is a point cloud-based Intersection over Union (IoU), that is, a ratio of points with the same name in the point cloud to points in a point cloud overlap area when the registration error is minimal. If the IoU of a point cloud is greater than a particular percentage, it is determined that the point cloud is a closed loop. In this case, $T_{i,j}$ is a rotation and translation matrix of the point cloud.

Step S1102: Construct an image optimization pose constraint based on the local map rotation and translation matrix.

Step S1103: Correct the high-precision trace by using the image optimization pose constraint to obtain a corrected high-precision trace.

Step S1104: Obtain the high-precision global map of the moving platform based on the corrected high-precision trace.

In the embodiments of the present invention, with the elapse of time, accumulated errors keep increasing, leading to reduced precision. Closed-loop detection may determine whether there is a great similarity between a scenario collected from a current frame and that from a previous frame. If yes, a loop is formed. The accumulation of errors may be reduced during optimization, to generate a high-precision global map.

Compared with the manner in the prior art, the embodiments of the present invention have at least one of the following advantages:

(1) A case that a single sensor fails in SLAM in a feature environment is resolved. The collection processing of the system has high stability and robustness.

(2) Multi-sensor fusion is used to resolve the problem that accumulated errors are large in a conventional SLAM algorithm, thereby improving the mapping precision of a global map.

Embodiment 2

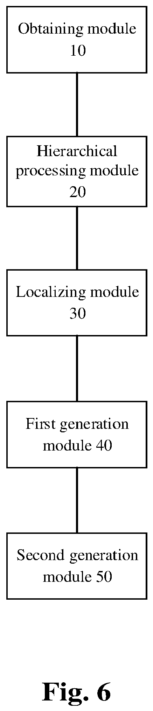

FIG. 6 is a schematic diagram of a multi-sensor fusion-based SLAM mapping system according to an embodiment of the present invention. The system is applied to a server. As shown in FIG. 6, the system includes an obtaining module 10, a hierarchical processing module 20, a localizing module 30, a first generation module 40, and a second generation module 50.

Specifically, the obtaining module 10 is configured to obtain a plurality of sensor data regarding a surrounding environment of a moving platform, the plurality of sensor data including point cloud data, image data, IMU data, and GNSS data.

The hierarchical processing module 20 is configured to perform hierarchical processing on the plurality of sensor data to generate a plurality of localization information, wherein one sensor data corresponds to one localization information.

The localizing module 30 is configured to obtain target localization information of the moving platform based on the plurality of localization information.

The first generation module 40 is configured to generate a high-precision local map based on the target localization information.

The second generation module 50 is configured to perform a closed-loop detection operation on the high-precision local map to obtain a high-precision global map of the moving platform.

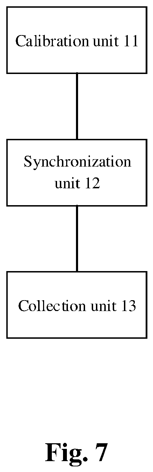

As shown in FIG. 7, the obtaining module 10 includes a calibration unit 11, a synchronization unit 12, and a collection unit 13.

Specifically, the calibration unit 11 is configured with a laser as a benchmark to calibrate position relationships among a camera, an IMU, a GNSS, and the laser to obtain calibration information, wherein the laser, the camera, the IMU and the GNSS are all sensors on the moving platform.

The synchronization unit 12 is configured with time of the GNSS as a benchmark to synchronize time of the laser, time of the camera, and time of the IMU to a current time system of the GNSS.

The collection unit 13 is configured to synchronously collect data from the laser, the camera, the IMU, and the GNSS to obtain the plurality of sensor data regarding the surrounding environment of the moving platform, wherein the point cloud data is the data collected from the laser, the image data is the data collected from the camera, the IMU data is the data collected from the IMU, and the GNSS data is the data collected from the GNSS.

The embodiments of the present invention further provide an electronic device including a memory, a processor and a computer program stored in the memory and performed by the processor, the processor, when performing the computer program, implements steps in the method according to Embodiment 1.

The embodiments of the present invention further provide a computer-readable medium having nonvolatile program code performed by a processor, the processor performs the method according to Embodiment 1 according to the program code.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments to some or all the technical features thereof, without departing from the scope of the technical solutions of the embodiments of the present invention.

**Claims**

1. A multi-sensor fusion-based Simultaneous Localization and Mapping, SLAM, method for a server, comprising:

   obtaining (S102) a plurality of sensor data regarding a surrounding environment of a moving platform, the plurality of sensor data comprising point cloud data, image data, inertial measurement unit, IMU, data, and global navigation satellite system, GNSS, data;
   performing (S104) hierarchical processing on the plurality of sensor data to generate a plurality of localization information, wherein one sensor data corresponds to one localization information;
   obtaining (S106) target localization information of the moving platform based on the plurality of localization information;
   generating (S108) a high-precision local map based on the target localization information; and
   performing (S110) a closed-loop detection operation to the high-precision local map to obtain a high-precision global map of the moving platform,
   wherein the step of obtaining (S102) the plurality of sensor data regarding the surrounding environment of the moving platform comprises:
   with a laser as a benchmark, calibrating (S1021) position relationships among a camera, an IMU, a GNSS and the laser to obtain calibration information, wherein the laser, the camera, the IMU, and the GNSS are all sensors on the moving platform;
   with time of the GNSS as a benchmark, synchronizing (S1022) time of the laser, time of the camera, and time of the IMU to a current time system of the GNSS; and
   synchronously collecting (S1023) data from the laser, the camera, the IMU and the GNSS to obtain the plurality of sensor data regarding the surrounding environment of the moving platform, wherein the point cloud data is the data collected from the laser, the image data is the data collected from the camera, the IMU data is the data collected from the IMU, and the GNSS data is the data collected from the GNSS.

2. The method according to claim 1, wherein in the step of performing (S104) hierarchical processing on the plurality of sensor data, a plurality of localization information is generated, which includes initial localization information, first localization information, and second localization information, comprising:

generating (S1041) the initial localization information based on the IMU data, the GNSS data, and the calibration information;

generating (S1042) the first localization information by using visual SLAM on basis of the initial localization information and the image data; and

generating (S1043) the second localization information by using laser SLAM on basis of the first localization information and the point cloud data.

3. The method according to claim 2, wherein the step of obtaining (S106) target localization information of the moving platform based on the plurality of localization information comprises:

extracting (S1061) a keyframe matching point set of the image data and a point cloud data matching point set;

generating (S1062) a comprehensive localization information database based on the second localization information, the IMU data, the GNSS data, the keyframe matching point set, and the point cloud data matching point set;

performing (S1063) joint optimization to data sets in the comprehensive localization information database to gain a high-precision trace of the moving platform; and

using (S1064) the high-precision trace as the target localization information.

4. The method according to claim 3, wherein in the step of generating (S108) a high-precision local map based on the target localization information, the high-precision local map includes a local image map and a local point cloud three-dimensional scene map, comprising:

resolving (S1081) position and attitude information of the keyframe of the image data based on the high-precision trace to generate the local image map; and

resolving (S1082) position and attitude information of the point cloud data based on the high-precision trace to generate the local point cloud three-dimensional scene map.

5. The method according to claim 4, wherein the step of performing (S110) a closed-loop detection operation to the high-precision local map to obtain a high-precision global map of the moving platform comprises:

performing (S1101) the closed-loop detection operation to the high-precision local map to obtain a local map rotation and translation matrix;

constructing (S1102) an image optimization pose constraint based on the local map rotation and translation matrix;

correcting (S1103) the high-precision trace by using the image optimization posture constraint to obtain a corrected high-precision trace; and

obtaining (S1104) the high-precision global map of the moving platform based on the corrected high-precision trace.

6. A multi-sensor fusion-based SLAM mapping system for a server, comprising an obtaining module (10), a hierarchical processing module (20), a localizing module (30), a first generation module (40), and a second generation module (50), wherein,

the obtaining module (10) is configured to obtain a plurality of sensor data regarding a surrounding environment of a moving platform, the plurality of sensor data comprising point cloud data, image data, inertial measurement unit, IMU, data, and global navigation satellite system, GNSS, data;

the hierarchical processing module (20) is configured to perform hierarchical processing on the plurality of sensor data to generate a plurality of localization information, wherein one sensor data corresponds to one localization information;

the localizing module (30) is configured to obtain target localization information of the moving platform based on the plurality of localization information;

the first generation module (40) is configured to generate a high-precision local map based on the target localization information; and

the second generation module (50) is configured to perform a closed-loop detection operation on the high-precision local map to obtain a high-precision global map of the moving platform,

wherein the obtaining module (10) further comprises a calibration unit (11), a synchronization unit (12), and a collection unit (13), wherein,

the calibration unit (11) is configured with a laser as a benchmark to calibrate position relationships among a camera, an IMU, a GNSS, and the laser to obtain calibration information, wherein the laser, the camera, the IMU and the GNSS are all sensors on the moving platform;

the synchronization unit (12) is configured with time of the GNSS as a benchmark to synchronize time of the laser, time of the camera, and time of the IMU to a current time system of the GNSS; and

the collection unit (13) is configured to synchronously collect data from the laser, the camera, the IMU, and the GNSS to obtain the plurality of sensor data regarding the surrounding environment of the moving platform, wherein the point cloud data is the data collected from the laser, the image data is the data collected from the camera, the IMU data is the data collected from the IMU, and the GNSS data is the data collected from the GNSS.

7. An electronic device comprising a memory, a processor and a computer program stored in the memory and performed by the processor, wherein the processor, when performing the computer program, implements steps in the method according to any one of claims 1 to 5.

8. A computer-readable medium having nonvolatile program code performed by a processor, wherein the processor performs the method according to any one of claims 1 to 5 according to the program code.

**Patentansprüche**

1. Simultaneous-Localization-and-Mapping-, SLAM-Verfahren auf der Basis von Multisensorfusion für einen Server, umfassend:

Erhalten (S102) einer Vielzahl von Sensordaten bezüglich einer umliegenden Umgebung einer sich bewegenden Plattform, wobei die Vielzahl von Sensordaten Punktwolkendaten, Bilddaten, Trägheitsmesseinheits-, IMU-Daten und globale Navigationssatellitensystem-, GNSS-Daten umfasst;

Durchführen (S104) von hierarchischer Verarbeitung an der Vielzahl von Sensordaten, um eine Vielzahl von Lokalisierungsinformationen zu erzeugen, wobei ein Sensordatenelement einer Lokalisierungsinformation entspricht;

Erhalten (S106) von Ziellokalisierungsinformationen der sich bewegenden Plattform basierend auf der Vielzahl von Lokalisierungsinformationen;

Erzeugen (S108) einer hochpräzisen lokalen Karte basierend auf den Ziellokalisierungsinformationen; und

Durchführen (S110) eines Detektionsvorgangs mit geschlossener Schleife an der hochpräzisen lokalen Karte, um eine hochpräzise globale Karte der sich bewegenden Plattform zu erhalten,

wobei der Schritt des Erhaltens (S102) der Vielzahl von Sensordaten bezüglich der umliegenden Umgebung der sich bewegenden Plattform Folgendes umfasst:

mit einem Laser als Benchmark, Kalibrieren (S1021) von Positionsbeziehungen zwischen einer Kamera, einer IMU, einem GNSS und dem Laser, um Kalibrierungsinformationen zu erhalten, wobei der Laser, die Kamera, die IMU und das GNSS alle Sensoren auf der sich bewegenden Plattform sind;

mit Zeit des GNSS als Benchmark, Synchronisieren (S1022) von Zeit des Lasers, Zeit der Kamera und Zeit der IMU mit einem aktuellen Zeitsystem des GNSS; und

synchrones Sammeln (S1023) von Daten von dem Laser, der Kamera, der IMU und dem GNSS, um die Vielzahl von Sensordaten bezüglich der umliegenden Umgebung der sich bewegenden Plattform zu erhalten, wobei die Punktwolkendaten die Daten sind, die von dem Laser gesammelt werden, die Bilddaten die Daten sind, die von der Kamera gesammelt werden, die IMU-Daten die Daten sind, die von der IMU gesammelt werden und die GNSS-Daten die Daten sind, die von dem GNSS gesammelt werden.

2. Verfahren gemäß Anspruch 1, wobei in dem Schritt des Durchführens (S104) von hierarchischer Verarbeitung an der Vielzahl von Sensordaten eine Vielzahl von Lokalisierungsinformationen erzeugt wird, die anfängliche Lokalisierungsinformationen, erste Lokalisierungsinformationen und zweite Lokalisierungsinformationen beinhaltet, umfassend:

Erzeugen (S1041) der anfänglichen Lokalisierungsinformationen basierend auf den IMU-Daten, den GNSS-Daten und den Kalibrierungsinformationen;

Erzeugen (S1042) der ersten Lokalisierungsinformationen durch Verwenden von visuellem SLAM auf Basis der anfänglichen Lokalisierungsinformationen und der Bilddaten; und

Erzeugen (S1043) der zweiten Lokalisierungsinformationen durch Verwenden von Laser-SLAM auf Basis der ersten Lokalisierungsinformationen und der Punktwolkendaten.

3. Verfahren gemäß Anspruch 2, wobei der Schritt des Erhaltens (S106) von Ziellokalisierungsinformationen der sich bewegenden Plattform basierend auf der Vielzahl von Lokalisierungsinformationen Folgendes umfasst:

Extrahieren (S1061) eines Keyframe-Übereinstimmungspunktsatzes der Bilddaten und eines Punktwolkendaten-Übereinstimmungspunktsatzes;
Erzeugen (S1062) einer umfangreichen Lokalisierungsinformationsdatenbank basierend auf den zweiten Lokalisierungsinformationen, den IMU-Daten, den GNSS-Daten, dem Keyframe-Übereinstimmungspunktsatz und dem Punktwolkendaten-Übereinstimmungspunktsatz;
Durchführen (S1063) von gemeinsamer Optimierung an Datensätzen in der umfangreichen Lokalisierungsinformationsdatenbank, um eine hochpräzise Spur der sich bewegenden Plattform zu gewinnen; und
Verwenden (S1064) der hochpräzisen Spur als die Ziellokalisierungsinformationen.

4. Verfahren gemäß Anspruch 3, wobei in dem Schritt des Erzeugens (S108) einer hochpräzisen lokalen Karte basierend auf den Ziellokalisierungsinformationen die hochpräzise lokale Karte eine lokale Bildkarte und eine dreidimensionale lokale Punktwolken-Szenenkarte beinhaltet, umfassend:

Auflösen (S1081) von Positions- und Lageinformationen des Keyframes der Bilddaten basierend auf der hochpräzisen Spur, um die lokale Bildkarte zu erzeugen; und
Auflösen (S1082) von Positions- und Lageinformationen der Punktwolkendaten basierend auf der hochpräzisen Spur, um die dreidimensionale lokale Punktwolken-Szenenkarte zu erzeugen.

5. Verfahren gemäß nach Anspruch 4, wobei der Schritt des Durchführens (S110) eines Detektionsvorgangs mit geschlossener Schleife an der hochpräzisen lokalen Karte, um eine hochpräzise globale Karte der sich bewegenden Plattform zu erhalten, Folgendes umfasst:

Durchführen (S1101) des Detektionsvorgangs mit geschlossener Schleife an der hochpräzisen lokalen Karte, um eine lokale Kartenrotations- und -translationsmatrix zu erhalten;
Konstruieren (S1102) einer Bildoptimierungsposenbeschränkung basierend auf der lokalen Kartenrotations- und -translationsmatrix;
Korrigieren (S1103) der hochpräzisen Spur durch Verwenden der Bildoptimierungshaltungsbeschränkung, um eine korrigierte hochpräzise Spur zu erhalten; und
Erhalten (S1104) der hochpräzisen globalen Karte der sich bewegenden Plattform basierend auf der korrigierten hochpräzisen Spur.

6. SLAM-Zuordnungssystem auf der Basis von Multisensorfusion für einen Server, umfassend ein Erhaltungsmodul (10), ein hierarchisches Verarbeitungsmodul (20), ein Lokalisierungsmodul (30), ein Modul der ersten Generation (40) und ein Modul der zweiten Generation (50), wobei

das Erhaltungsmodul (10) dazu konfiguriert ist, eine Vielzahl von Sensordaten bezüglich einer umliegenden Umgebung einer sich bewegenden Plattform zu erhalten, wobei die Vielzahl von Sensordaten Punktwolkendaten, Bilddaten, Trägheitsmesseinheits-, IMU-Daten und globale Navigationssatellitensystem-, GNSS-Daten umfasst;
das hierarchische Verarbeitungsmodul (20) dazu konfiguriert ist, hierarchische Verarbeitung an der Vielzahl von Sensordaten durchzuführen, um eine Vielzahl von Lokalisierungsinformationen zu erzeugen, wobei ein Sensordatenelement einer Lokalisierungsinformation entspricht;
das Lokalisierungsmodul (30) dazu konfiguriert ist, Ziellokalisierungsinformationen der sich bewegenden Plattform basierend auf der Vielzahl von Lokalisierungsinformationen zu erhalten;
das Modul der ersten Generation (40) dazu konfiguriert ist, eine hochpräzise lokale Karte basierend auf den Ziellokalisierungsinformationen zu erzeugen; und
das Modul der zweiten Generation (50) dazu konfiguriert ist, einen Detektionsvorgang mit geschlossener Schleife an der hochpräzisen lokalen Karte durchzuführen, um eine hochpräzise globale Karte der sich bewegenden Plattform zu erhalten,
wobei das Erhaltungsmodul (10) ferner eine Kalibrierungseinheit (11), eine Synchronisierungseinheit (12) und eine Sammeleinheit (13) umfasst, wobei
die Kalibrierungseinheit (11) mit einem Laser als Benchmark konfiguriert ist, um Positionsbeziehungen zwischen einer Kamera, einer IMU, einem GNSS und dem Laser zu kalibrieren, um Kalibrierungsinformationen zu erhalten, wobei der Laser, die Kamera, die IMU und das GNSS alle Sensoren auf der sich bewegenden Plattform sind;
die Synchronisierungseinheit (12) mit Zeit des GNSS als Benchmark konfiguriert ist, um Zeit des Lasers, Zeit der Kamera und Zeit der IMU mit einem aktuellen Zeitsystem des GNSS zu synchronisieren; und die Sammeleinheit (13) dazu konfiguriert ist, synchron Daten von dem Laser, der Kamera, der IMU und dem GNSS zu sammeln, um die Vielzahl von Sensordaten bezüglich der umliegenden Umgebung der sich bewegenden Plattform zu erhalten, wobei die Punktwolkendaten die Daten sind, die von dem Laser gesammelt werden, die Bilddaten die Daten sind, die von der Kamera gesammelt werden, die IMU-Daten die Daten sind, die von der IMU gesammelt werden und die GNSS-Daten die Daten sind, die von dem GNSS gesammelt werden.

7. Elektronische Vorrichtung, umfassend einen Speicher, einen Prozessor und ein Computerprogramm, das in dem Speicher gespeichert und durch den Prozessor durchgeführt wird, wobei der Prozessor, wenn das Computerprogramm durchgeführt wird, Schritte in dem Verfahren gemäß einem der Ansprüche 1 bis 5 implementiert.

8. Computerlesbares Medium mit nichtflüchtigem Programmcode, der durch einen Prozessor durchgeführt wird, wobei der Prozessor das Verfahren gemäß einem der Ansprüche 1 bis 5 gemäß dem Programmcode durchführt.

**Revendications**

1. Procédé de localisation et de mappage simultanés, SLAM, à base de fusion à capteurs multiples pour un serveur, comprenant :

l'obtention (S102) d'une pluralité de données de capteur concernant un environnement environnant d'une plate-forme mobile, la pluralité de données de capteur comprenant des données de nuage de points, des données d'image, des données d'unité de mesure inertielle, IMU, et des données de système mondial de navigation par satellite, GNSS ;
la réalisation (S104) d'un traitement hiérarchique sur la pluralité de données de capteur pour générer une pluralité d'informations de localisation, dans lequel une donnée de capteur correspond à une information de localisation ;
l'obtention (S106) d'informations de localisation cible de la plate-forme mobile sur la base de la pluralité d'informations de localisation ;
la génération (S108) d'une carte locale de haute précision sur la base des informations de localisation cible ; et
la réalisation (S110) d'une opération de détection en boucle fermée sur la carte locale de haute précision pour obtenir une carte globale de haute précision de la plate-forme mobile,
dans lequel l'étape d'obtention (S102) de la pluralité de données de capteur concernant l'environnement environnant de la plate-forme mobile comprend :

avec un laser comme référence, l'étalonnage (S1021) de relations de position entre une caméra, une IMU, un GNSS et le laser pour obtenir des informations d'étalonnage, dans lequel le laser, la caméra, l'IMU et le GNSS sont tous des capteurs sur la plate-forme mobile ;
avec une heure du GNSS comme référence, la synchronisation (S1022) d'une heure du laser, d'une heure de la caméra et d'une heure de l'IMU avec un système d'heure actuelle du GNSS ; et
la collecte synchrone (S1023) de données à partir du laser, de la caméra, de l'IMU et du GNSS pour obtenir la pluralité de données de capteur concernant l'environnement environnant de la plate-forme mobile, dans lequel les données de nuage de points sont les données collectées à partir du laser, les données d'image sont les données collectées à partir de la caméra, les données d'IMU sont les données collectées à partir de l'IMU, et les données de GNSS sont les données collectées à partir du GNSS.

2. Procédé selon la revendication 1, dans lequel à l'étape de réalisation (S104) d'un traitement hiérarchique sur la pluralité de données de capteur, une pluralité d'informations de localisation est générée, qui comprend des informations de localisation initiales, des premières informations de localisation et des secondes informations de localisation, comprenant :

la génération (S1041) des informations de localisation initiales sur la base des données d'IMU, des données de GNSS et des informations d'étalonnage ;
la génération (S1042) des premières informations de localisation en utilisant une SLAM visuel sur la base des informations de localisation initiales et des données d'image ; et
la génération (S1043) des secondes informations de localisation en utilisant une SLAM laser sur la base des premières informations de localisation et des données de nuage de points.

3. Procédé selon la revendication 2, dans lequel l'étape d'obtention (S106) d'informations de localisation cible de la plate-forme mobile sur la base de la pluralité d'informations de localisation comprend :

l'extraction (S1061) d'un ensemble de points de correspondance d'image clé des données d'image et d'un ensemble de points de correspondance de données de nuage de points ;

la génération (S1062) d'une base de données d'informations de localisation complète sur la base des secondes informations de localisation, des données d'IMU, des données de GNSS, de l'ensemble de points de correspondance d'image clé et de l'ensemble de points de correspondance de données de nuage de points ;

la réalisation (S1063) d'une optimisation conjointe d'ensembles de données dans la base de données d'informations de localisation complète pour obtenir une trace de haute précision de la plate-forme mobile ; et

l'utilisation (S1064) de la trace de haute précision comme informations de localisation cible.

4. Procédé selon la revendication 3, dans lequel à l'étape de génération (S108) d'une carte locale de haute précision sur la base des informations de localisation de la cible, la carte locale de haute précision comprend une carte d'image locale et une carte de scène tridimensionnelle de nuage de points local, comprenant :

la résolution (S1081) d'informations de position et d'attitude de l'image clé des données d'image sur la base de la trace de haute précision pour générer la carte d'image locale ; et

la résolution (S1082) d'informations de position et d'attitude des données de nuage de points sur la base de la trace de haute précision pour générer la carte de scène tridimensionnelle de nuage de points locale.

5. Procédé selon la revendication 4, dans lequel l'étape de réalisation (S110) d'une opération de détection en boucle fermée sur la carte locale de haute précision pour obtenir une carte globale de haute précision de la plate-forme mobile comprend :

la réalisation (S1101) de l'opération de détection en boucle fermée sur la carte locale de haute précision pour obtenir une matrice de rotation et de translation de carte locale ;

la construction (S1102) d'une contrainte de pose d'optimisation d'image sur la base de la matrice locale de rotation et de translation de la carte ;

la correction (S1103) de la trace de haute précision en utilisant la contrainte de posture d'optimisation d'image pour obtenir une trace de haute précision corrigée ; et

l'obtention (S1104) de la carte globale de haute précision de la plate-forme mobile sur la base de la trace de haute précision corrigée.

6. Système de mappage SLAM à base de fusion à capteurs multiples pour un serveur, comprenant un module d'obtention (10), un module de traitement hiérarchique (20), un module de localisation (30), un premier module de génération (40) et un second module de génération (50), dans lequel,

le module d'obtention (10) est configuré pour obtenir une pluralité de données de capteur concernant un environnement environnant d'une plate-forme mobile, la pluralité de données de capteur comprenant des données de nuage de points, des données d'image, des données d'unité de mesure inertielle, IMU, et des données de système mondial de navigation par satellite, GNSS ;

le module de traitement hiérarchique (20) est configuré pour réaliser un traitement hiérarchique sur la pluralité de données de capteur pour générer une pluralité d'informations de localisation, dans lequel une donnée de capteur correspond à une information de localisation ;

le module de localisation (30) est configuré pour obtenir des informations de localisation cible de la plate-forme mobile sur la base de la pluralité d'informations de localisation ;

le premier module de génération (40) est configuré pour générer une carte locale de haute précision sur la base des informations de localisation cible ; et

le second module de génération (50) est configuré pour réaliser une opération de détection en boucle fermée sur la carte locale de haute précision pour obtenir une carte globale de haute précision de la plate-forme mobile,

dans lequel le module d'obtention (10) comprend en outre une unité d'étalonnage (11), une unité de synchronisation (12) et une unité de collecte (13), dans lequel,

l'unité d'étalonnage (11) est configurée avec un laser comme référence pour étalonner des relations de position entre une caméra, une IMU, un GNSS et le laser pour obtenir des informations d'étalonnage, dans lequel le laser, la caméra, l'IMU et le GNSS sont tous des capteurs sur la plate-forme mobile ;

l'unité de synchronisation (12) est configurée avec une heure du GNSS comme référence pour synchroniser une heure du laser, une heure de la caméra et une heure de l'IMU avec un système d'heure actuelle du GNSS ; et

l'unité de collecte (13) est configurée pour collecter de manière synchrone des données à partir du laser, de la caméra, de l'IMU et du GNSS pour obtenir la pluralité de données de capteur concernant l'environnement environnant de la plate-forme mobile, dans lequel les données de nuage de points sont les données collectées à partir du laser, les données d'image sont les données collectées à partir de la caméra, les données d'IMU sont les données collectées à partir de l'IMU, et les données de GNSS sont les données collectées à partir du GNSS.

7. Dispositif électronique comprenant une mémoire, un processeur et un programme informatique stocké dans la mémoire et réalisé par le processeur, dans lequel le processeur, lors de la réalisation du programme informatique, met en œuvre des étapes dans le procédé selon l'une quelconque des revendications 1 à 5.

8. Support lisible par ordinateur présentant un code de programme non volatil réalisé par un processeur, dans lequel le processeur réalise le procédé selon l'une quelconque des revendications 1 à 5 selon le code de programme.

S102

Obtain a plurality of sensor data regarding a
surrounding environment of a moving platform

S104

Perform hierarchical processing on the plurality of
sensor data to generate a plurality of localization
information

S106

Obtain target localization information of the
moving platform based on the plurality of
localization information

S108

Generate a high-precision local map based on the
target localization information

S110

Perform a closed-loop detection operation to the
high-precision local map to obtain a high-precision
global map of the moving platform

# Fig. 1

S1021

With a laser as a benchmark, calibrate position relationships among a camera, an IMU, a GNSS, and the laser to obtain calibration information

S1022

With time of the GNSS as a benchmark, synchronize time of the laser, time of the camera and time of the IMU to a current time system of the GNSS

S1023

Synchronously collect data from the laser, the camera, the IMU and the GNSS to obtain the plurality of sensor data regarding the surrounding environment of the moving platform

**Fig. 2**

S1041

Generate the initial localization information based on the IMU data, the GNSS data, and the calibration information

S1042

Generate the first localization information by using visual SLAM on basis of the initial localization information and the image data

S1043

Generate the second localization information by using laser SLAM on basis of the first localization information and the point cloud data

**Fig. 3**

S1061

Extract a keyframe matching point set of the image data and a point cloud data matching point set

Generate a comprehensive localization information database based on the second localization information, the IMU data, the GNSS data, the keyframe matching point set, and the point cloud data matching point set

S1062

Perform joint optimization to data sets in the comprehensive localization information database to gain a high-precision trace of the moving platform

S1063

Use the high-precision trace as the target localization information

S1064

**Fig. 4**

S1101

Perform the closed-loop detection operation to the high-precision local map to obtain a local map rotation and translation matrix

S1102

Construct an image optimization pose constraint based on the local map rotation and translation matrix

S1103

Correct the high-precision trace by using the image optimization pose constraint to obtain a corrected high-precision trace

S1104

Obtain the high-precision global map of the moving platform based on the corrected high-precision trace

# Fig. 5

**Fig. 6**

Calibration unit 11

Synchronization unit 12

Collection unit 13

**Fig. 7**

**REFERENCES CITED IN THE DESCRIPTION**

**Patent documents cited in the description**

- CN 109341706
- CN 109900265
- CN 109556615
- CN 106153048